# EUROPEAN PATENT APPLICATION

(11) **EP 4 759 643 A1**
(43) Date of publication of application: **17.06.2026**
(21) Application number: 24218806.8
(22) Date of filing: 10.12.2024
(51) Int. Cl.: B60R 21/36

(54) **AIRBAG ASSEMBLY FOR ALLEVIATING AN IMPACT OF A VULNERABLE ROAD USER ON A VEHICLE, A VEHICLE, AND A METHOD FOR OPERATING AN AIRBAG ASSEMBLY**

(71) Applicant: Volvo Car Corporation, 405 31 Göteborg (SE)
(72) Inventor: RUTELIN, Sebastian, 40531 Göteborg (SE); ROSENBERG, Johan, 40531 Göteborg (SE); KJELLANDER, Michaela, 40531 Göteborg (SE)
(74) Representative: Kransell & Wennborg KB

(57) **Abstract**

The disclosure relates to an airbag assembly (24) for alleviating an impact of a vulnerable road user on a vehicle (10). The airbag assembly (24) comprises a first airbag (26) storable in a front portion (14) of the vehicle (10) and deployable over only one of a first a-pillar (20) and a second a-pillar (22) of the vehicle (10). The airbag assembly (24) further comprises a first holding means (46) for restricting a movement of the first airbag (26) when in the deployed state (38). The first holding means (46) has a first end (52) connected to the first airbag (26) and a second end (54) connectable to the front portion (14) of the vehicle (10). Additionally, a vehicle (10) is described. Also, a method for operating an airbag assembly (24) is presented.

## Description

### TECHNICAL FIELD

The present disclosure relates to an airbag assembly for alleviating an impact of a vulnerable road user on a vehicle.

Moreover, the present disclosure is directed to a vehicle.

Additionally, the present disclosure relates to a method for operating an airbag assembly.

### BACKGROUND ART

Today's vehicles usually comprise various safety systems to reduce the injury risk of passengers inside the vehicle and the injury risk of other traffic participants involved in an accident with the vehicle. Such traffic participants may be so-called vulnerable road users, e.g. pedestrians, cyclists or motor-cyclists. In general, vulnerable road users are understood as road users which are not in a car-type vehicle. Such safety systems use sensors and control units to detect collisions, e.g., with traffic participants. In these crash situations protection mechanisms are activated, alleviating the impact and reducing injuries of the traffic participant. In this context, protection mechanisms may include deploying one or more airbags located outside the vehicle cabin.

### SUMMARY

It is an objective of the present disclosure to improve protection mechanisms including deploying one or more airbags located outside the vehicle cabin.

The problem is at least partially solved or alleviated by the subject matter of the independent claims of the present disclosure, wherein further examples are incorporated in the dependent claims.

According to a first aspect, there is provided an airbag assembly for alleviating an impact of a vulnerable road user on a vehicle. The airbag assembly comprises a first airbag storable in a front portion of the vehicle and deployable over only one of a first a-pillar and a second a-pillar of the vehicle. The airbag assembly further comprises a first holding means for restricting a movement of the first airbag when in the deployed state. The first holding means has a first end connected to the first airbag and a second end connectable to the front portion of the vehicle. The first airbag may be understood as a bag that may be selectively inflated with gas in case of an accident. A state in which the airbag is inflated with gas is also called a deployed state. In order to alleviate the impact of the vulnerable road user, the airbag is arranged between the vulnerable road user and the associated a-pillar. When not in use, i.e. when not inflated, the airbag assumes a non-deployed or stored state in a front portion of the vehicle. The front portion of the vehicle refers to a portion of the vehicle which is arranged in front of a windscreen along a standard forward driving direction. Thus, the front portion of the vehicle in particular comprises a front lid of the vehicle. The a-pillar may also be called an a-post. The a-pillar may be either one of two structural parts of the vehicle that are positioned on either side of the windscreen and connect a roof of the vehicle to the remaining portions of the vehicle provided below the windscreen. It is noted that for vehicles that do not comprise a roof at all or that do not comprise a rigid roof, e.g. convertible vehicles, a frame element extending along an upper edge of the windscreen may be regarded as the roof. This frame element may be called an upper frame or top frame. The fact that the first airbag is deployable over only one of the first a-pillar and the second a-pillar covers two alternatives. In a first alternative, the first airbag is deployable over the first a-pillar. In the second alternative, the first airbag is deployable over the second a-pillar. Thus, the first airbag is deployable over only one a-pillar. In other words, the deployment of the first airbag is focused on the a-pillar potentially colliding with the vulnerable road user in a crash situation. The first holding means restricts the movement of the first airbag to ensure a controlled deployment of the first airbag and a reliable positioning of the airbag on the relevant a-pillar. In other words, the first holding means may prevent the first airbag from slipping off the first a-pillar or the second a-pillar. Still in other words, the first holding means may increase the stability of the first airbag during the deployment and thereafter when the first airbag is in the deployed state. This has the effect that the protection mechanism of the airbag assembly may be improved. Additionally, the fact that the first airbag is deployable over only one of a first a-pillar and a second a-pillar is advantageous. This may be best understood when comparing the first airbag to an airbag configured for covering both the first a-pillar and the second a-pillar. The airbag configured for covering one a-pillar only may be comparatively small. Therefore, the airbag may require a comparatively small inflator only and still may be deployable quickly. This facilitates the arrangement of the airbag assembly in the vehicle. The underlying insight is that usually, a vulnerable road user collides with one a-pillar only. Moreover, using such an airbag, the sight of a vehicle occupant may not be limited by additional airbags extending over other parts of the vehicle's exterior such that the vehicle occupant may react to the crash situation in a more controlled manner.

It is understood that the airbag assembly according to the present disclosure is connectable to a crash sensor assembly. Such a crash sensor assembly is configured to control the airbag assembly such that the airbag assembly is deployed, when needed. Moreover, such a crash sensor assembly usually is configured to indicate a direction associated with an expected collision. Based thereon, one may determine whether there is a risk that the vulnerable road user will collide with one of the a-pillars. In other words, using the crash sensor assembly, it may be known with which a-pillar a vulnerable road user will collide.

According to an example, the first holding means comprises at least one first strap. A length of the at least one first strap defines a position of the first airbag in the deployed state. In more detail, the at least one first strap may be coupled to the first airbag. In general, by varying the length of the at least one first strap, the position of the first airbag may change in the deployed state. This has the effect that a range of movement of the first airbag may be predefined in a precise manner. In other words, the at least one first strap may further stabilize the position of the first airbag when in deployed state. This may ensure a controlled deployment of the first airbag, which minimizes or eliminates the risk of the first airbag from moving uncontrollably during deployment. Additionally, a risk of moving in an unintentional direction of the first airbag may be reduced or eliminated. In this context, a strap is a simple and reliable means to provide all these advantages.

According to an example, the airbag comprises a tether for controlling and/or adapting the cushioning effect in the deployed state of the airbag. Using the tether, the manner the airbag is deployed and/or a geometric form of the airbag in the deployed state may be controlled and/or adapted. The tether is separate from the holding means.

According to an example, the airbag assembly further comprises an adjustment unit for adjusting the length of the at least one first strap. This has the effect that the position of the first airbag may be adjusted in a reliable and precise manner when in the deployed state. In more detail, the adjustment unit may be coupled to the first holding means, e.g. the at least one first strap. This may allow a dynamic adjustment of the length of the at least one first strap based on different crash situations. Consequently, the adjustment unit may adjust the position of the first airbag such that the protection of the vulnerable road user may be further improved in case of a crash situation. Further, this may further improve the controlled deployment of the first airbag, which further minimizes or eliminates the risk of the first airbag from moving uncontrollably during deployment. Additionally, the risk of moving in an unintentional direction of the first airbag may be further reduced or eliminated. This may minimize the risk of injury of the vulnerable road user.

According to an example, the first airbag is bar-shaped, when in the deployed state. The bar-shaped first airbag is arrangeable along only one of the first a-pillar and the second a-pillar of the vehicle. In this context, bar-shaped may be understood in that the first airbag is longer than wide or thick. More precisely, a largest dimension of the first airbag may be at least three times as large as the remaining two dimensions. In particular, the remaining two dimensions may be substantially the same or differ by 50% or less. This shape of the first airbag has the effect that the first airbag may be reliably and precisely arrangeable along the first a-pillar or the second a-pillar.

According to an example, the first airbag is L-shaped, when in the deployed state. A first leg of the L-shaped first airbag is arrangeable along only one of the first a-pillar and the second a-pillar of the vehicle. A second leg of the L-shaped first airbag is arrangeable at least partially over a windscreen and/or a front lid. In this context, the front lid may be understood as a hood or a bonnet. It is noted that the front lid may not necessarily cover a motor located underneath the front lid. In this case, the front lid may cover a frunk. An L-shaped airbag is understood as an airbag comprising two bar-shaped portions which are arranged at an angle between 60 degrees and 120 degrees. The L-shaped first airbag may provide a comprehensive or global coverage over the first a-pillar or the second a-pillar as well as over at least a portion of the windscreen and/or the front lid. This has the effect that a further improved protection on various areas of the vehicle may be achieved.

According to an example, the airbag assembly further comprises a second airbag storable in a front portion of the vehicle and deployable over only one of the first a-pillar and the second a-pillar of the vehicle. The first airbag and the second airbag are deployable over different ones of the first a-pillar and the second a-pillar. Consequently, the first airbag may either be deployable over the first a-pillar or the second a-pillar while the second airbag may either be deployable over the respective other one of the first a-pillar or second a-pillar. Further, the first airbag and the second airbag may be controlled independently from each other. This means that either the first airbag or the second airbag may be deployed in a crash situation. This has the effect that a controlled and effective coverage of the first a-pillar or the second a-pillar may be achieved as required by the specific crash situation. Thus, each of the first airbag and the second airbag may be comparatively small. Therefore, the airbags may require a comparatively small inflator only and still may be deployable quickly. This facilitates the arrangement of the airbag assembly in the vehicle. The underlying insight is that usually, a vulnerable road user collides with one a-pillar only. Additionally, using either the first airbag or the second airbag may increase the flexibility of the overall airbag assembly. This may ensure an individual protection of the vulnerable road user in a crash situation by covering various crash scenarios.

According to an example, the airbag assembly further comprises a second holding means for restricting a movement of the second airbag when in the deployed state. The second holding means has a first end connected to the second airbag and a second end connectable to the front portion of the vehicle. The second holding means may restrict the movement of the second airbag to ensure a controlled deployment of the second airbag. The use of such second holding means may enable that the second airbag is protecting the vulnerable road user in an optimized manner. This is because the second holding means may prevent the second airbag of slipping off the first a-pillar or the second a-pillar. In other words, the second holding means may increase the stability of the second airbag during the deployment and thereafter when the second airbag is in the deployed state. This has the effect that the protection mechanism of the airbag assembly may be further improved.

According to an example, the second holding means comprises at least one second strap. A length of the at least one second strap defines a position of the second airbag in the deployed state. In more detail, the at least one second strap may be coupled to the second airbag. In general, by varying the length of the at least one second strap, the position of the second airbag may change in the deployed state. This has the effect that a range of movement of the second airbag may be predefined in a precise manner. In other words, the at least one second strap may further stabilize the position of the second airbag when in deployed state. This may ensure a controlled deployment of the second airbag, which minimizes or eliminates the risk of the second airbag from moving uncontrollably during deployment. Additionally, a risk of moving in an unintentional direction of the second airbag may be reduced or eliminated. In this context, a strap is a simple and reliable means to provide all these advantages.

According to an example, the second holding means and the first holding means are each formed by a portion of a common holding means. The common holding means may be understood as a unit that encompasses and integrates at least partially both the first holding means and the second holding means. The common holding means may ensure the controlled and coordinated use of both the first holding means and the second holding means. In other words, the common holding means may ensure the controlled and coordinated movement of both the first airbag and the second airbag. This has the effect that a selective control of both the first airbag and the second airbag may be improved. Moreover, using a common holding means is structurally simple.

In an example, wherein the at least one first strap and the at least one second strap are used, the at least one first strap and the at least one second strap may be portions of the same strap. This has the effect that the risk of accidental deployment of both the first airbag and the second airbag may be further minimized or prevented. Moreover, this solution is structurally simple.

According to an example, the second airbag is bar-shaped, when in the deployed state. The bar-shaped second airbag is arrangeable along only one of the first a-pillar and the second a-pillar of the vehicle. In this context, bar-shaped may be understood in that the second airbag is longer than wide or thick. More precisely, a largest dimension of the second airbag may be at least three times as large as the remaining two dimensions. In particular, the remaining two dimensions may be substantially the same or differ by 50% or less. This shape of the second airbag has the effect that the second airbag may be reliably and precisely arrangeable along the first a-pillar or the second a-pillar.

According to an example, the second airbag is L-shaped, when in the deployed state. A first leg of the L-shaped second airbag is arrangeable along only one of the first a-pillar and the second a-pillar of the vehicle. A second leg of the L-shaped second airbag is arrangeable at least partially over a windscreen and/or a front lid, e.g. essentially horizontally. The L-shaped second airbag may provide a more comprehensive or global coverage over the first a-pillar or the second a-pillar as well as over the windscreen and/or the front lid. In this context, the front lid may be understood as a hood or a bonnet. It is noted that the front lid may not necessarily cover a motor located underneath the front lid. In this case, the front lid may cover a frunk. An L-shaped airbag is understood as an airbag comprising two bar-shaped portions which are arranged at an angle between 60 degrees and 120 degrees. The L-shaped first airbag may provide a comprehensive or global coverage over the first a-pillar or the second a-pillar as well as over at least a portion of the windscreen and/or the front lid. This has the effect that an even further improved protection on various areas of the vehicle may be achieved.

According to an example, the airbag assembly further comprises a singular inflator unit coupled to the first airbag and to the second airbag and configured for selectively inflating only one out of the first airbag and the second airbag. Alternatively, the airbag assembly further comprises a first inflator unit coupled to the first airbag and configured for inflating the first airbag only and a second inflator unit coupled to the second airbag and configured for inflating the second airbag only. Thus, in the first alternative, the airbag assembly comprising a singular inflator unit for both the first airbag and the second airbag. Still the singular inflator unit is configured for inflation only one airbag, i.e. the first airbag or the second airbag, at a time. Thus, the singular inflator unit may be compact. Moreover, the use of the singular inflator unit may facilitate the manufacturing of the airbag assembly. This is because the complexity of the airbag assembly may be reduced. In the second alternative, wherein the airbag assembly comprises the first inflator unit and the second inflator unit, one inflator unit is associated with each airbag. Thus, each of the airbags may be deployed independently. In other words, the control of the individual first airbag and of the second airbag may be facilitated. Moreover having two separate inflator units enhances the flexibility when arranging the components of the airbag assembly.

According to an example, the first airbag and the second airbag are stored in separate housings when in the non-deployed state. Alternatively, the first airbag and the second airbag are stored in a shared housing when in the non-deployed state. In the first alternative, the first airbag may be stored in a first housing and the second airbag may be stored in a second housing. Separate housings may allow a modular and flexible manufacturing of the overall airbag assembly because the separate housings may be placed independently in the vehicle. Additionally, the maintenance and replacement of the first airbag and/or the second airbag may be facilitated. in the second alternative the shared housing may also be referred to as a common housing of the first airbag and the second airbag. Thus, in the second alternative, only one housing is provided this may simplify overall airbag assembly due to the reduced number of components.

According to a second aspect, there is provided a vehicle. The vehicle comprises an airbag assembly of the first aspect. As has been mentioned above, using such airbag assembly, a focused deployment of the first airbag with respect to a crash situation, where a vulnerable road user may collide with one of the two a-pillars, may be achieved. Thus, reliable protection is provided. At the same time, the airbag assembly is relatively compact as has already been explained above. Moreover, the sight of a vehicle occupant may not be limited by additional airbags extending over other parts of the vehicle's exterior such that the vehicle occupant may react to the crash situation in a controlled manner. Additionally, the protection mechanism of the airbag assembly, thus, of the vehicle may be improved. This means that the vehicle safety may be enhanced.

According to a third aspect, there is provided a method for operating an airbag assembly. The method comprises selectively deploying a first airbag over only one of a first a-pillar and a second a-pillar of the vehicle or a second airbag over only one of a first a-pillar and a second a-pillar of the vehicle. The first airbag and the second airbag are deployable over different ones of the first a-pillar and the second a-pillar. Deploying the first airbag over only one of the first a-pillar and the second a-pillar or deploying the second airbag over only one of the first a-pillar and the second a-pillar may be understood in that only one out of the first airbag and the second airbag is deployed in case of a crash. Thereby, an impact of a vulnerable road user involved in an accident with the vehicle may be alleviated in an enhanced manner. This is because the relevant one of the first airbag and the second airbag is selectively deployed depending on the crash scenario. In simplified words, in case the vulnerable road user is about to collide with the vehicle closer to the first a-pillar, only the airbag configured for covering the first a-pillar is deployed, i.e. the first airbag or the second airbag. In case the vulnerable road user is about to collide with the vehicle closer to the second a-pillar, only the airbag configured for covering the second a-pillar is deployed, i.e. the respective other one of the first airbag or the second airbag. This has the effect that the risk of injuring vulnerable road users may be reduced. Altogether, the vehicle safety may be enhanced. Moreover the airbag assembly may be operated in an efficient manner.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: schematically shows a vehicle according to the present disclosure comprising an airbag assembly according to the present disclosure, wherein the airbag assembly may be operated using a method according to the present disclosure,
- Figure 2: schematically shows a first example of the airbag assembly of the vehicle of Figure 1 in a detailed view along direction II of Figure 1,
- Figure 3: schematically shows the airbag assembly of Figure 2, wherein a first airbag is in a deployed state,
- Figure 4: schematically shows the airbag assembly of Figure 2, wherein a second airbag is in a deployed state,
- Figure 5: schematically shows a second example of the airbag assembly of the vehicle of Figure 1 in a detailed view along direction V of Figure 1,
- Figure 6: schematically shows the airbag assembly of Figure 5, wherein a first airbag is in a deployed state,
- Figure 7: schematically shows the airbag assembly of Figure 5, wherein a second airbag is in a deployed state,
- Figure 8: schematically shows a third example of the airbag assembly of the vehicle of Figure 1 in a detailed view along direction VIII of Figure 1,
- Figure 9: schematically shows the airbag assembly of Figure 8, wherein the first airbag is in a deployed state, and
- Figure 10: schematically shows the airbag assembly of Figure 8, wherein the second airbag is in a deployed state.

### DETAILED DESCRIPTION

The Figures are merely schematic representations and serve only to illustrate examples of the disclosure. Identical or equivalent elements are in principle provided with the same reference signs.

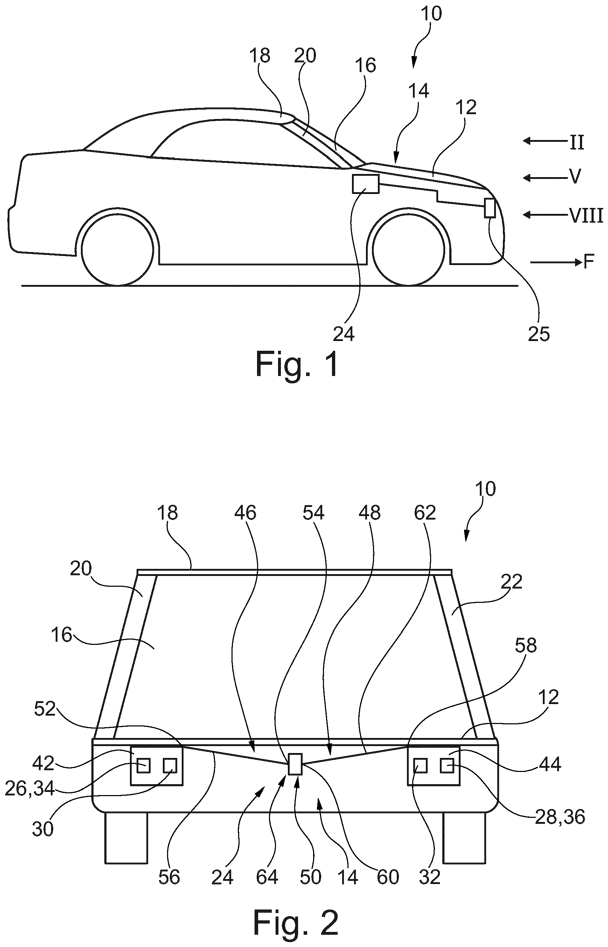

Figure 1 shows a vehicle 10 that comprises a front lid 12 (see Figure 1). In the present example, the front lid 12 is a bonnet or a hood covering a front portion 14 of the vehicle 10. It is noted that the front lid 12 may also be a cover element covering a frunk, in case no motor is located under the front lid 12.

In this context, the front portion 14 comprises structural parts of a body of the vehicle 10 which are arranged in front of a windscreen 16 along a standard forward driving direction F.

The vehicle 10 further comprises a roof 18.

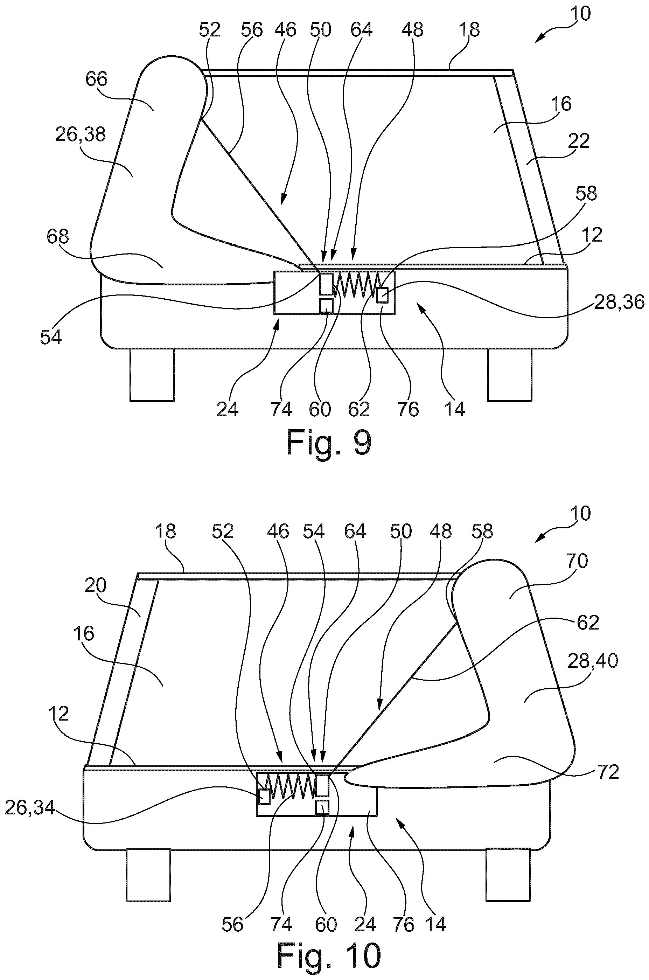

The vehicle 10 also comprises a first a-pillar 20 and a second a-pillar 22, wherein each of the first a-pillar 20 and the second a-pillar 22 is mechanically connected to the roof 18 and to the front portion 14 of the vehicle 10 (see Figures 2 to 10). In other words, the first a-pillar 20 and the second a-pillar 22 both extend between the front portion 14 of the vehicle 10 and the roof 18. Moreover, the first a-pillar 20 and the second a-pillar 22 are arranged on opposite lateral sides of the windscreen 16.

The vehicle 10 further comprises an airbag assembly 24.

The airbag assembly 24 is configured to alleviate an impact of a vulnerable road user on the vehicle 10 in case of a crash situation.

To this end, the airbag assembly 24 is communicatively coupled to a sensor unit 25 configured to detect a crash or imminent crash as well as an associated collision direction.

A first example of the airbag assembly 24 is shown in Figures 2 to 4.

In the first example, the airbag assembly 24 comprises a first airbag 26 and a second airbag 28.

The airbag assembly 24 further comprises a first inflator unit 30 and a second inflator unit 32.

The first inflator unit 30 is coupled to the first airbag 26 and the second inflator unit 32 is coupled to the second airbag 28.

This means that the first inflator unit 30 is configured to inflate the first airbag 26 only such that the first airbag 26 changes from a non-deployed state 34 or stored state to a deployed state 38.

The second inflator unit 32 is configured to inflate the second airbag 28 only such that the second airbag 28 changes from a non-deployed state 36 or stored state to a deployed state 40.

When in the stored or non-deployed states 34, 36, the first airbag 26 and the second airbag 28 are stored in separate housings.

This means that the first airbag 26 is stored in a first housing 42 and the second airbag 28 is stored in a second housing 44 when in the non-deployed state 34, 36 or stored state.

The first housing 42 and the second housing 44 are both arranged in the front portion 14 of the vehicle 10. More precisely, the first housing 42 and the second housing 44 are arranged adjacent to a lower edge of the windscreen 16. When considering the standard forward driving direction F, the first housing 42 and the second housing 44 are arranged in front of the windscreen 16, but directly adjacent to the windscreen 16.

Consequently, the first airbag 26 and the second airbag 28 are stored in the front portion 14 of the vehicle 10 when in the non-deployed state 34, 36.

This means that both the first airbag 26 and the second airbag 28 are stored under the front lid 12.

The first housing 42 and the second housing 44 are arranged at a distance from each other, wherein this distance extends along a lateral width of the vehicle 10 (cf. Figure 2).

In more detail, the first housing 42 is arranged closer to the first a-pillar 20 than to the second a-pillar 22.

The second housing 44 is arranged closer to the second a-pillar 22 than to the first a-pillar 20.

Thus, the first airbag 26 is deployable over only the first a-pillar 20 of the vehicle 10 and the second airbag 28 is deployable over only the second a-pillar 22 of the vehicle 10.

In other words, the first airbag 26 and the second airbag 28 are deployable over different ones of the first a-pillar 20 and the second a-pillar 22.

Generally speaking, the first airbag 26 is deployable over only one of the first a-pillar 20 and the second a-pillar 22 of the vehicle 10, and the second airbag 28 is deployable over only one of the respective other one of the first a-pillar 20 and the second a-pillar 22 of the vehicle 10.

Further, in the first example, the first inflator unit 30 is arranged in the first housing 42 and the second inflator unit 32 is arranged in the second housing 44.

It is noted that the first airbag 26 and the second airbag 28 may have various shapes.

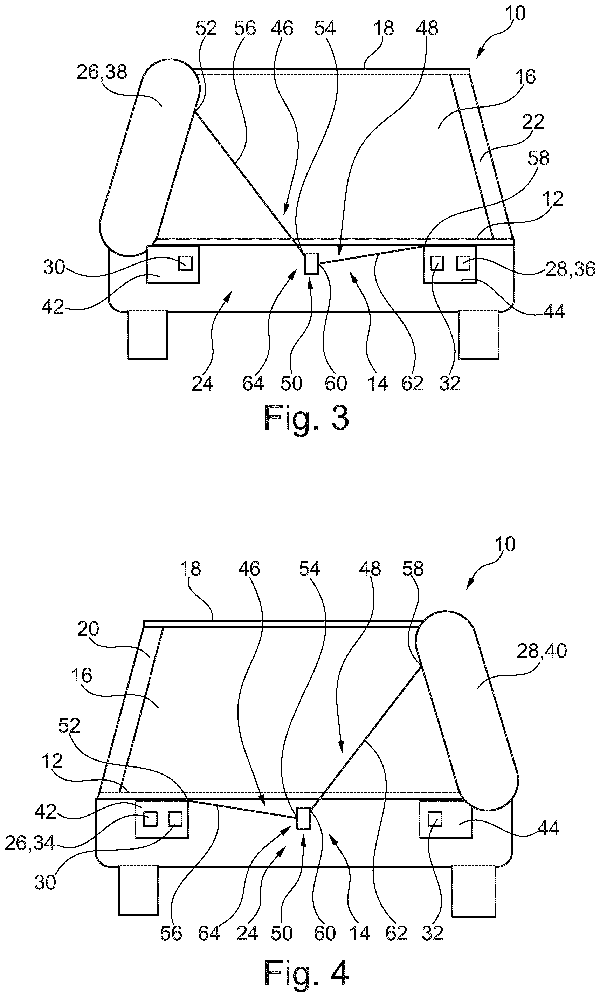

In the first example, the first airbag 26 is bar-shaped when in the deployed state 38 (see Figure 3). Further, the second airbag 28 is bar-shaped when in the deployed state 40 (see Figure 4).

It is pointed out that the bar-shaped first airbag 26 is arranged only along the first a-pillar 20 of the vehicle 10 when in deployed state 38 and the second airbag 28 is arranged only along the second a-pillar 22 of the vehicle 10 when in deployed state 40.

The airbag assembly 24 further comprises a first holding means 46 and a second holding means 48, wherein both the first holding means 46 and the second holding means 48 are each formed by a portion of a common holding means 50.

The first holding means 46 restricts the movement of the first airbag 26.

In this example, the first holding means 46 and the second holding means 48 each formed by the portion of the common holding means 50 are arranged between the first housing 42 and the second housing 44.

The first holding means 46 has a first end 52 connected to the first airbag 26.

The first holding means 46 further has a second end 54 connected to the front portion 14 of the vehicle 10, i.e. to the body of the vehicle 10.

The first holding means 46 comprises one first strap 56.

A length of the first strap 56 defines a predetermined position of the first airbag 26. The length of the first strap 56 is configured such that the first airbag 26 extends over the first a-pillar 20 when in the deployed state.

The second holding means 48 restricts the movement of the second airbag 28.

The second holding means 48 has a first end 58 connected to the second airbag 28.

The second holding means 48 further has a second end 60 connected to the front portion 14 of the vehicle 10.

The second holding means 48 comprises one second strap 62.

A length of the second strap 62 defines a predetermined position of the second airbag 28. The length of the second strap 62 is configured such that the second airbag 28 extends over the second a-pillar 22 when in the deployed state.

It is noted that, in the present example, the first strap 56 and the second strap 62 are formed as portions of the same strap. This same strap is referred to as the common holding means 50.

In the present example, the airbag assembly 24 further comprises an adjustment unit 64 which his optional.

The adjustment unit 64 is configured to adjust the length of the first strap 56 and of the second strap 62.

Therefore, the movement of the respective first airbag 26 and second airbag 28 can be restricted by adjusting the length of the respective first strap 56 and second strap 62.

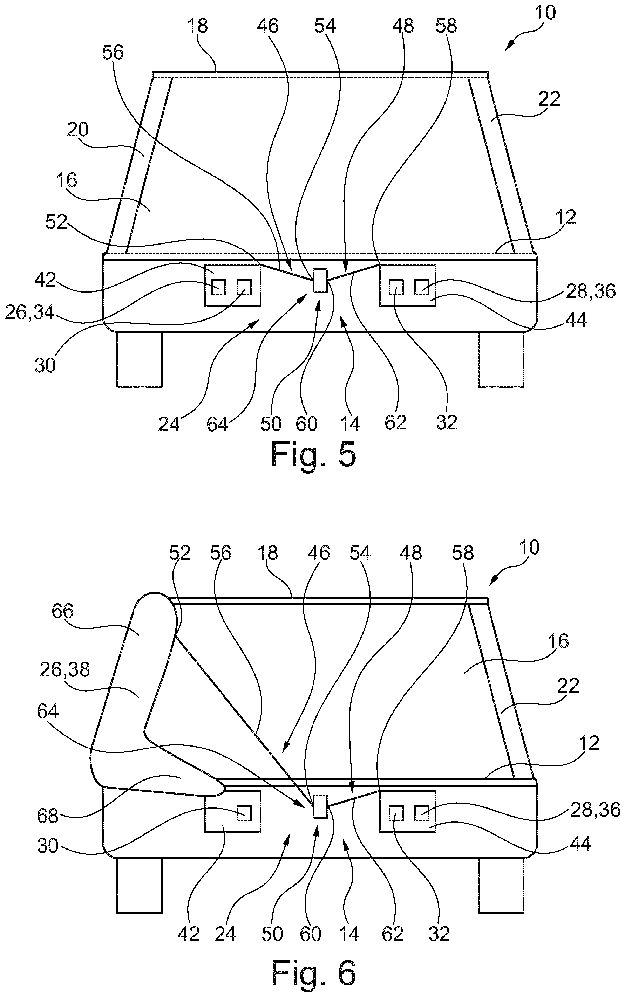

A second example of the airbag assembly 24 is shown in Figures 5 to 7, which will be described in the following. It is noted that only differences between the first example and the second example are explained.

In the second example, the first housing 42 and the second housing 44 are arranged at a lateral distance to each other. However, as compared to the first example, this distance is smaller.

Moreover, in the second example, the first airbag 26 is L-shaped when in the deployed state 38 (see Figure 6).

A first leg 66 of the L-shaped first airbag 26 is arranged only along the first a-pillar 20 of the vehicle 10 when in deployed state 38.

A second leg 68 of the L-shaped first airbag 26 is arranged partially over the windscreen 16 and the front lid 12 when in deployed state 38.

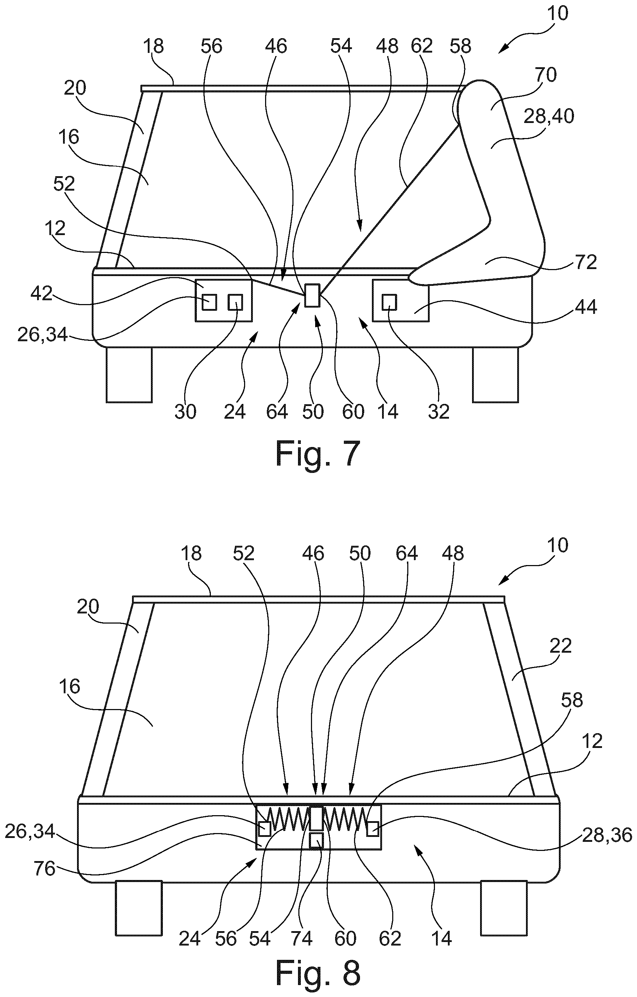

Further, also the second airbag 28 is L-shaped when in the deployed state 40 (see Figure 7).

A first leg 70 of the L-shaped second airbag 28 is arranged only along the second a-pillar 22 of the vehicle 10 when in deployed state 40.

A second leg 72 of the L-shaped second airbag 28 is arranged at least partially over the windscreen 16 and the front lid 12 when in deployed state 40.

A third example of the airbag assembly 24 is shown in Figures 8 to 10, which will be described in the following. It is noted that only the differences over the previous examples will be explained.

In the third example, the airbag assembly 24 comprises a singular inflator unit 74.

The singular inflator unit 74 is coupled to the first airbag 26 and to the second airbag 28.

Moreover, the singular inflator unit 74 is configured to selectively inflate only one out of the first airbag 26 and the second airbag 28.

Furthermore, in the third example, the first airbag 26 and the second airbag 28 are stored in a shared housing 76 when in the non-deployed state 34, 36 or stored state.

The shared housing 76 is arranged at a same lateral distance from the first a-pillar 20 and the second a-pillar 22, i.e. in the lateral center of the vehicle 10.

The first holding means 46 and the second holding means 48 are each formed by a portion of a common holding means 50 as has been explained above. Both the first holding means 46 and the second holding means 48 are arranged inside the shared housing 76, when the first airbag 26 and the second airbag 28 are in the non-deployed state 34, 36.

Further, in this example, a singular inflator unit 74 is arranged in the shared housing 76.

In the following, the method for operating the airbag assembly 24 will be explained in more detail.

When executing the method, the first airbag 26 and the second airbag 28 are assumed to be in the non-deployed state 34, 36, which corresponds to the state as shown in Figures 2, 5, and 8.

The method comprises selectively deploying the first airbag 26 over only the first a-pillar 20 of the vehicle 10 in case of a crash situation, wherein the vulnerable road user is closer to the first a-pillar 20 than to the second a-pillar 22.

Alternatively, the second airbag 28 is selectively deployed over only the second a-pillar 22 of the vehicle 10 in case of a crash situation, wherein the vulnerable road user is closer to the second a-pillar 22 than to the first a-pillar 20.

It is noted that the first airbag 26 and the second airbag 28 are only deployable over different ones of the first a-pillar 20 and the second a-pillar 22.

As has been mentioned before, the sensor unit 25 provides the information which of the airbags should be deployed, i.e. whether the first airbag 26 or the second airbag 28 shall be deployed.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: front lid
- 14: front portion
- 16: windscreen
- 18: roof
- 20: first a-pillar
- 22: second a-pillar
- 24: airbag assembly
- 25: sensor unit
- 26: first airbag
- 28: second airbag
- 30: first inflator unit
- 32: second inflator unit
- 34: first airbag in non-deployed state
- 36: second airbag in non-deployed state
- 38: first airbag in deployed state
- 40: second airbag in deployed state
- 42: first housing
- 44: second housing
- 46: first holding means
- 48: second holding means
- 50: common holding means
- 52: first end of the first holding means
- 54: second end of the first holding means
- 56: first strap
- 58: first end of the second holding means
- 60: second end of the second holding means
- 62: second strap
- 64: adjustment unit
- 66: first leg of the L-shaped first airbag
- 68: second leg of the L-shaped first airbag
- 70: first leg of the L-shaped second airbag
- 72: second leg of the L-shaped second airbag
- 74: singular inflator unit
- 76: shared housing
- F: standard forward driving direction

## Claims

1. An airbag assembly (24) for alleviating an impact of a vulnerable road user on a vehicle (10), the airbag assembly (24) comprising:
a first airbag (26) storable in a front portion (14) of the vehicle (10) and deployable over only one of a first a-pillar (20) and a second a-pillar (22) of the vehicle (10), and
a first holding means (46) for restricting a movement of the first airbag (26) when in the deployed state (38), wherein the first holding means (46) has a first end (52) connected to the first airbag (26) and a second end (54) connectable to the front portion (14) of the vehicle (10).

2. The airbag assembly (24) of claim 1, wherein the first holding means (46) comprises at least one first strap (56), wherein a length of the at least one first strap (56) defines a predetermined position of the first airbag (26) in the deployed state (38).

3. The airbag assembly (24) of claim 2, further comprising an adjustment unit (64) for adjusting the length of the at least one first strap (56).

4. The airbag assembly (24) of any one of the preceding claims, wherein the first airbag (26) is, when in the deployed state (38), bar-shaped, and arrangeable along only one of the first a-pillar (20) and the second a-pillar (22) of the vehicle (10).

5. The airbag assembly (24) of any one of claims 1 to 3, wherein the first airbag (26) is, when in the deployed state (38), L-shaped, wherein a first leg (66) of the L-shaped first airbag (26) is arrangeable along only one of the first a-pillar (20) and the second a-pillar (22) of the vehicle (10) and wherein a second leg (68) of the L-shaped first airbag (26) is arrangeable at least partially over a windscreen (16) and/or a front lid (12).

6. The airbag assembly (24) of any one of the preceding claims, further comprising a second airbag (28) storable in a front portion (14) of the vehicle (10) and deployable over only one of the first a-pillar (20) and the second a-pillar (22) of the vehicle (10), wherein the first airbag (26) and the second airbag (28) are deployable over different ones of the first a-pillar (20) and the second a-pillar (22).

7. The airbag assembly (24) of claim 6, further comprising a second holding means (48) for restricting the movement of the second airbag (28) when in the deployed state (40), wherein the second holding means (48) has a first end (58) connected to the second airbag and a second end (60) connectable to the front portion (14) of the vehicle (10).

8. The airbag assembly (24) of claim 7, wherein the second holding means (48) comprises at least one second strap (62), wherein a length of the at least one second strap (62) defines a predetermined position of the second airbag (28) in the deployed state (40).

9. The airbag assembly (24) of claim 7 or 8, wherein the second holding means (48) and the first holding means (46) are each formed by a portion of a common holding means (50).

10. The airbag assembly (24) of any one of claims 6 to 9, wherein the second airbag (28) is, when in the deployed state (40), bar-shaped, and arrangeable along only one of the first a-pillar (20) and the second a-pillar (22) of the vehicle (10).

11. The airbag assembly (24) of any one of claims 6 to 9, wherein the second airbag (28) is, when in the deployed state (40), L-shaped, wherein a first leg (70) of the L-shaped second airbag (28) is arrangeable along only one of the first a-pillar (20) and the second a-pillar (22) of the vehicle (10) and wherein a second leg (72) of the L-shaped second airbag (28) is arrangeable at least partially over a windscreen (16) and/or a front lid (12).

12. The airbag assembly (24) of any one of claims 6 to 11, further comprising a singular inflator unit (74) coupled to the first airbag (26) and to the second airbag (28) and configured for selectively inflating only one out of the first airbag (26) and the second airbag (28), or
a first inflator unit (30) coupled to the first airbag (26) and configured for inflating the first airbag (26) only, and a second inflator unit (32) coupled to the second airbag (28) and configured for inflating the second airbag (28) only.

13. The airbag assembly (24) of any one of claims 6 to 12, wherein the first airbag (26) and the second airbag (28) are stored in separate housings when in the non-deployed state (34, 36) or wherein the first airbag (26) and the second airbag (28) are stored in a shared housing (76) when in the non-deployed state (34, 36).

14. A vehicle (10) comprising an airbag assembly (24) of any one of the preceding claims.

15. A method for operating an airbag assembly (24), the method comprising:
selectively deploying a first airbag (26) over only one of a first a-pillar (20) and a second a-pillar (22) of the vehicle (10) or a second airbag (28) over only one of a first a-pillar (20) and a second a-pillar (22) of the vehicle (10), wherein the first airbag (26) and the second airbag (28) are deployable over different ones of the first a-pillar (20) and the second a-pillar (22).
